# EUROPEAN PATENT APPLICATION

(11) **EP 1 151 940 A1**
(43) Date of publication of application: **07.11.2001**
(21) Application number: 01202008.7
(22) Date of filing: 10.06.1996
(51) Int. Cl.: B65D 83/14

(54) **Aerosol can containing cream**

(30) Priority: 09.06.1995 NL 1000541
(62) Divisional of application: 96201614.3
(71) Applicant: Friesland Brands B.V., 8937 AC Leeuwarden (NL)
(72) Inventor: Vanrusselt, Marleen Hubertine Paola, 3290 Diest (BE)
(74) Representative: Prins, Adrianus Willem

(57) **Abstract**

The present invention relates to an aerosol can comprising a viscous, gel-like or paste-like food having a viscosity of at least 20 mPa.s at a shearing rate of less than 400 s⁻¹, and in particular an aerosol can filled with cream, and a propellant, the propellant being formed for at least 15 percent by weight, based on the total propellant, of a first gas selected from nitrogen gas and/or compressed air, which propellant further contains a second gas being acceptable from the viewpoint of food technology, which substantially dissolves in the food, which aerosol can has an initial pressure of at least 5 atmospheres

## Description

This is a divisional application of EP-A-0 747 301, the contents of which are fully incorporated by reference in the present application.

The present invention is in the field of packed, viscous, gel-like and paste-like foods which usually have a long storage life, even when part of the contents has been taken from the packing. The non-used part of the packed product is not contaminated with microorganisms that may cause decay. Besides, the invention may also be used for products having a limited storage life. More particularly, the present invention relates to an aerosol can containing cream.

It is generally known that the storage life of viscous and paste-like foods can be considerably prolonged when these foods are packed in heated, pasteurized and preferably sterilized conditions. Conventional packing materials comprise glass and, optionally plastic-coated, aluminium, tinplate, paper and cardboard packings. However, a problem arises when the packings are opened. From the outside, microbial infection occurs which rapidly deteriorates the keeping qualities of the product.

It is further generally known that the use of aerosol cans has great advantages of use. Products packed in aerosol cans, e.g. whipped cream, can be properly dosed. Moreover, the product is ready for use. The user can exactly take the amount of product he needs. The remaining contents of the aerosol can remains available for a next use.

In the light of the present invention it is important that products, such as whipped cream, packed in aerosol cans have a longer storage life and are hygienically packed. An aerosol can is properly shut off from the outside air. In addition, the contents of an aerosol can are maintained under excess pressure with respect to the environment. This guarantees that no infection of the packed product from the outside can occur.

By the term "aerosol can" is meant in this specification and in the claims any packing comprising a product and at least a propellant having an initial pressure of at least 5 atmospheres and preferably 8 atmospheres, provided with a valve and containing a product which can be controllably dosed from the packing by means of co-packed energy when the valve is opened. The co-packed energy is formed by a gaseous propellant.

Many attempts have already been made to market foods in aerosol cans. At the moment, however, - and on this embodiment the present application focuses - whipped cream (including artificial toppings resembling whipped cream) is the only really successful product in an aerosol can. In all cases of commercial use, the energy co-packed in aerosol cans for whipped cream is laughing gas (N₂O) as propellant. This gas is largely present in the whipped cream phase in dissolved form and merges into the gaseous form when put in the cream in the outside atmosphere, thus giving the whipped cream the desired foamy structure. Besides, a minor part of the laughing gas is present in gaseous condition in the head space of the aerosol can.

Propellants soluble in the liquid products, such as laughing gas and carbon dioxide, are not suitable for use in products which in use should be viscous, gel-like or paste-like, or which may only have a relatively low overrun. They give too high an overrun. The term "overrun", which is also referred to as "dispensing percentage", indicates the volume increase of a, viscous or non-viscous, liquid under the influence of gaseous phase present in that liquid.

As said herein-above, the present invention especially focuses on aerosol cans containing cream, including artificial toppings resembling whipped cream. Such aerosol cans are known.

In EP-A-0 454 195, canned non-dairy cream fat-emulsions are described, wherein the cream fat-emulsions are mixed with N₂O as a propellant.

Peter describes in an article in "Seifen - Öle - Fette - Wachse", 97, (1971), nr 24 aerosol cans containing cream, and e.g. fresh, liquid cream containing 2-3 % cane sugar as stabiliser. As propellants, laughing gas, laughing gas in combination with carbon dioxide, and fluorcarbonhydrates (esp. Frigen C318) are described.

In an article in Lait et Nous, (1992), no. 1, 13-15, Vanrusselt and Brams describe aerosol cans with cream as made and sold by the present applicant. The aerosol cans are filled with laughing gas as propellant.

Juffs *et al*. describe in an article in The Australian Journal of Dairy Technology (1980) 132-136 the keeping quality characteristics of cream stored under a pressurized atmosphere of nitrous oxide compared to cream stored under normal atmosphere, while in addition creams containing microorganisms were grown under 550kPa air, nitrogen, and nitrous oxide.

GB-B-987,322 describes a can containing cream having a fat content of 30% mixed with 5 wt.% sugar and some vanilline, which cream is saturated with nitrous oxide or a mixture of nitrous oxide and carbon dioxide.

US-A-2,294,172 and US-A-2,435,682 describe that already in 1935 and in 1942 cans containing cream and nitrous oxide were known. In said letter US patent, it is also noted that nitrous oxide can be replaced by freon, cyclopropane, dimethylether or methylchloride.

In "The Science and Technology of Aerosol Packaging", edited by Sciarra and Stoller, (1974), John Wiley & Sons, it is noted at pages 432-433 in the chapter "Food and Pharmaceutical Aerosols" that several propellants are available for use in foods. As examples nitrous oxide, carbon dioxide, nitrogen, octafluorocyclobutane and chloropentafluoroethane are mentioned. Relevant with an eye on the present invention is the statement
"At present, whipped cream and other toppings utilize a mixture of carbon dioxide and nitrous oxide as the propellant system. This mixture has also been combined with a mixture of both fluorinated hydrocarbons for use in similar food aerosols. It should be kept in mind that the type of dispensing desired must be considered when the propellant system is selected. The more soluble propellants, nitrous oxide and carbon dioxide, tend to form a product that foams. Nitrogen, on the other hand, delivers the product in a nonaerated form". (underscoring added)

Also Herzka and Pickthall make this difference in soluble (nitrous oxide, carbon dioxide) and non-soluble (nitrogen, argon) propellants in their handbook Pressurized Packaging (Aerosols), (1961), London Butterworks (see page 77). At page 77, nitrous oxide and carbon dioxide are described as soluble propellants. Reference is made to the fact that an equilibrium exists between the propellant in the headspace of an aerosol can and in the product. This leads to a gradual drop in pressure when the dispenser is emptied. Particularly, it is stated that
"this gradual drop in pressure is the chief disadvantage encountered with this type of propellant and sometimes the pressure available when the dispenser is nearly empty may be insufficient to exhaust the contents, leaving as much as 10% of the product in the dispenser. As the product containing the dissolved gas issues from the nozzle the gas comes out of solution and expands. If the product has certain characteristics it will be whipped into a foam, as is the case with cream".
As will be elaborated herein-below, the problem in gradual drop in pressure and not fully emptying the can filled with cream is part of the problem to be solved by the present invention. For completeness' sake, it is noted that at page 178 of this handbook, it is noted that nitrogen and argon, due to their low solubilities have the greatest application with products where a minimum of aeration is desirable, e.g. in mayonnaise, salad cream, mustard, tomato ketchup, cheese spread, cooking oil and syrups.

US-A-3,583,446 describes in example 2 a mixture of dairy cream and a mixture of octafluorocyclobutane-nitrous oxide propellant.

Sanders (in: Principles of Aerosol Technology; (1970) Van Nostrand Reinhold Company) discusses a number of propellants for aerosol cans, both for food and non-food applications. Nitrogen is referred to under the nonfood applications, while it is noted that it does hardly or not dissolve in the liquid phase.

While discussing the use of propellants in whipped cream at pages 324-326, it is noted that the fluorocarbon propellant C-138, which in fact is a liquid floating on the heavier cream and in equilibrium with a small amount of C-138 being in the gas form, per se or in combination with nitrous oxide, produces a whipped cream with improved stiffness and stability, with better color retention and much less seepage or drainage, as compared to similar cream whipped with nitrous oxide. Fluorocarbon propellants have however a number of considerable disadvantages, which will become clear from the following reference.

German "Offenlegungsschrift 25 17 988 describes a process for bringing propellants in aerosol cans. It attempts to give a solution to problems associated with propellants used in the past, such as freons. In this light, it states that
"Aerosole finden als kosmetische, pharmazeutische, technische und Lebensmittelaerosole eine umfangreiche, auf den meisten Gebieten noch wachsende Anwendung. Dies ist nicht zuletzt ein Grund dafür, daβ die überwiegend eingesetzten druckverflüssigten Treibmittel, wie Fluorkohlenwasserstoffe (z.B. Frigen, Freon, usw.) oder reine Kohlenwasserstoffe (z.B. Propan, Butan, usw.) zunehmend Kritik erfahren. In der Tat sind die herkömmlichen druckverflüssigten Treibmitteln, insbesondere die Fluorkohlenwasserstoffe mit einer Reihe von Nachteilen behaftet."

Examples of disadvantages of such by rather low pressure liquified propellants are corrosion problems due to the acid character of freons; strong temperature dependence and explosion danger, fire risks, cost price and especially ecological considerations (attack on ozon layer).

The invention described in said DE-OS is a particular manner to introduce gases in aerosol cans to serve therein as a propellant. A problem observed in this document for nitrogen gas in respect to carbon dioxide is the relative low solubility in organic solvents.

US-A-3,622,354 relates to syrups of reduced viscosity which can be discharged from a valved pressurized container into a portable liquid, esp. milk, to form a milk-shake-like product. It is noted that in the pressurized container, one can use any of the known propellant gases for food products, such as nitrogen, nitrous oxide, fluorinated hydrocarbons, and mixtures of carbon dioxide with any of the neutral gases, such as nitrous oxide.

It is known from European patent application 0 202 053 that nitrogen gas may be included in the head space of vessels filled with carbonated beverages, and in particular beer. With this gas it is contemplated to prevent too much carbon dioxide dissolved in the beverage from escaping from that beverage when an amount of beverage has been withdrawn from the vessel. Such an escape of carbon dioxide leads to quality deficiencies.

French patent application 2 516 483 relates to a container containing beverages susceptible to oxidation, in particular wine. In order to prevent oxidation, an amount of "neutral gas" (read: nitrogen gas) is applied above the wine.

The beverages to which the two documents discussed in the two previous paragraphs are directed have a viscosity of less than 5 mPa.s, while the containers of those beverages cannot be designated as aerosol cans and, furthermore, have an initial pressure of (considerably) less than 5 atmospheres. Moreover, the role of nitrogen in both documents has nothing to do with the role of nitrogen when used in the present invention as described herein-below.

EP-A-0 257 336 describes foamable skin creams, the object being to improve the foaming characteristics. In such foams two aspects play an important part, namely foaming and foam stability. These aspects may be influenced chiefly by including specific additives, in particular specific surfactants, in the recipe of the agent to be foamed. This is clearly apparent from the above European patent application, which proposes a very special cream composition. The illustrated compositions contain non-ionic, anionic and/or cationic surfactants in high contents. Apart from the fact that these agents are generally not "food grade", the amounts required are often unacceptably high for foods. Furthermore, foods are usually subjected during their processing to a high-temperature treatment, such as pasteurization or sterilization, to which many surfactants are not resistant. Finally, reference is made to the fact that many surfactants influence the flavour and/or aroma of a product, which is unacceptable for use in foods.

Besides the very special requirements for the composition, the European application discussed in the previous paragraph, indicates that additional modifications of foaming characteristics can be realized by adapting the composition of the propellant. For this purpose a number of propellant mixtures is given by way of illustration, namely laughing gas/carbon dioxide, laughing gas/ fluorohydrocarbon and laughing gas/nitrogen. No further details are given on particular effects obtainable by said illustrated mixtures.

While explicitly referring back to the discussion of Herzka's and Pickthall's handbook Pressurized Packaging (Aerosols), (1961), London Butterworks (see page 77) it is part of the present invention to provide a solution to the problem of the gradual pressure drop and the remaining of considerable amounts of product in the can.

It has now been found that when viscous, gel-like or paste-like foods, in general foods having a viscosity of at least 20 mPa.s, and preferably of at least 40 mPa.s (measured at a shearing rate of less than 400 s⁻¹, 20°C, Dynamic Stress Rheometer (Rheometrics® )), and in particular creams, are packed in an aerosol can, these foods can be dosed therefrom by using as a propellant system a combination of a first gas selected from nitrogen gas and/or compressed air, which first gas is substantially insoluble in the food, present in an amount of at least 15 percent by weight, based on the total propellant, and of a second gas being acceptable from the viewpoint of food technology, which substantially dissolves in the food, which aerosol can has an initial pressure of at least 5 atmospheres, without the propellant capacity decreasing so rapidly that the aerosol can cannot be emptied completely. It is assumed that the viscosity of the food plays a part in this respect.

Surprisingly, as elaborated herein-below, when nitrogen gas is used a foam stabilizing effect is obtained.

According to the invention, it has therefore become possible to pack viscous, gel-like or paste-like foods, and especially creams, in an aerosol can, from which the product can be dosed in the form at a relatively low overrun.

The present invention relates to an aerosol can comprising a viscous, gel-like or paste-like food having a viscosity of at least 20 mPa.s, and preferably of at least 40 mPa.s (measured at a shearing rate of less than 400 s⁻ ¹, 20°C, Dynamic Stress Rheometer (Rheometrics® )), and in particular cream, and a propellant, the propellant being formed for at least 15 percent by weight, based on the total propellant, of a first gas selected from nitrogen gas and/or compressed air, which propellant further contains a second gas being acceptable from the viewpoint of food technology, which substantially dissolves in the food, which aerosol can has an initial pressure of at least 5 atmospheres.

In the most preferred embodiment, the food in the can is a cream, and in particular common cream.

Preferably, the first gas, which of course must be acceptable from the viewpoint of food technology is nitrogen gas. In the alternative, compressed air, consisting as to 80% of nitrogen gas may be used. In this connection it should be noted that air contains about 20% oxygen gas, which gas may give rise to undesirable oxidation reactions with constituents in the product packed in the can.

Contrary to the use of propellants, such as laughing gas, carbon dioxide and other gases soluble in the packed medium, esp. in the cream, the packed medium is not dosed from the aerosol can as an excessively foamed product.

In particular the use of nitrogen with liquid foods gives a somewhat foamy surface. As a result of turbulency, geometry of the valve, and depending on the degree of pressing the dosing button a desired foam is formed. Shaking has the result that the gaseous phase and the liquid phase are mixed even more intensively. The foam obtained by catching nitrogen gas is very stable in environmental conditions and may give the product to be dosed an attractive appearance.

For this reason, in a second aspect, the present invention also relates to the use of nitrogen gas in a viscous, gel-like or paste-like food having a viscosity of at least 20 mPa.s at a shearing rate of less than 400 s⁻¹, packed in an aerosol can having an initial pressure of at least 5 atmospheres, in an amount of at least 15 percent by weight, based on the total propellant, as a stable foam producing propellant. In a special preferred embodiment of this aspect of the invention, the propellant consists completely of nitrogen. This gas is attractive both because of its cost price and because of the fact that it prevents undesirably oxidation reactions. In a preferred embodiment of this use, the nitrogen gas is present, drawn to the total weight of the propellant, in an amount of 15-100%, preferably at least 45%, the optional remainder being formed by a gas which is properly soluble in the food.

By combining the first gas with a gas acceptable from the viewpoint of food technology which does dissolve in the food to a considerable degree, such as laughing gas or carbon dioxide, the invention provides foods, and especially creams, of which the desired foaming characteristics can be adjusted. Through the presence of, anyhow, 15 percent by weight, based on the total weight of the propellant, of a gas which does not, if at all, dissolve, the overrun will not exceed 500%. After dosing the foods according to the invention, these foods preferably have an overrun of less than 300%.

The control of the foaming characteristics and thus the overrun is mainly given by the gas composition. In a preferred embodiment, the aerosol can of the present invention contains as the second gas laughing gas.

The first gas is present in the aerosol can, depending on the desired foaming characteristic and drawn to the weight of the total composition of the propellant, in an amount of at least 15%, preferably at least 45%. Preferably, it is used with laughing gas.

As said, the most preferred embodiment of the present invention is an aerosol can filled with cream. However, also other liquid or viscous foods that can be foamed to some extent can be used, as long as the minimum viscosity requirement is met. Suitable aerosol can systems according to the invention contain foods having a viscosity of at least 20 mPa.s, preferably at least 40 mPa.s. The maximum viscosity is limited by the possibilities of the aerosol can. Examples of products in which the advantages of the aerosol can packing according to the invention show up very well are sweet sauces such as vanilla sauce (e.g. "sauce anglaise"), chocolate sauces, caramel sauce; desserts, such as light mousses, sabayons, and pudding; savoury sauces, such as different dressings, ketchup, mustard, and pepper sauce; and cream, in particular common cream. When coffee cream is packed in the aerosol can according to the invention, in which nitrogen gas is the only propellant, a foamy milk can be dosed on, e.g., coffee, thus giving the coffee a cappuccino-like appearance.

As secondary prior art, it is noted that it is technically possible to pack more viscous products, such as mayonnaise, ketchup, mustard, pâté and cheese pastes, in aerosol cans. The aerosol cans to be used here are usually of the type in which the co-packed energy is supplied in a mechanical system, such as a spring system. Because of the absence of propellants the packed product is released in the form as present in the container. If it is contemplated to give the product a somewhat light appearance, there may optionally be used a combined system which in addition to the mechanical mechanism contains an amount of propellant. However, the greatest problem of these mechanical and combined systems is the cost price. In fact, the advantages of such aerosol cans do not outweigh the high price.

Moreover, aerosol cans are known in which the propellant is contained in a separate compartment. This gas gives the energy required to expel the packed product without being in contact with the product, which is essential to the present invention. The separate compartments, which are separated from each other by, e.g., a piston, a flexible partition wall - or even embodiments in which the gas is put in a separate container - require a technological adaptation of the aerosol cans, which is not necessary according to the present invention.

The aerosol cans according to the invention do not work on the basis of a mechanical system, which considerably reduces the cost of production. In particular, when sterile air or nitrogen gas is used as a propellant, there is formed a relatively inexpensive packing system, at least as compared with known aerosol can packings.

The aerosol cans used according to the invention have an initial pressure - i.e. a pressure in the packing not opened - of at least 5 atmospheres, preferably at least 8 atmospheres, and usually 8-12 atmospheres. Besides, the maximum pressure for conventional aerosol cans is about 18 atmospheres. In fact, the initial pressure is adjusted on the basis of experiments in which it is examined how much gas is required to completely empty the aerosol can under normal conditions.

The amount of gas which can be used in total in an aerosol can mainly depends on the nature of the material from which the container is made, but is chiefly determined by legal regulations. In addition, the amount of gas depends on the holding capacity of the aerosol can and the degree of filling, which is known to those skilled in the art. When nitrogen gas forms the propellant of the aerosol system, a minimum pressure of about 8 bar is initially necessary to obtain an aerosol can system giving an acceptable performance. In general, depending on the volume of the aerosol can, 1-20 g nitrogen gas is put in an aerosol can. Usually, aerosol cans having a holding capacity of 405 ml according to the invention contain 250 ml product and 2.1 g nitrogen gas and 1000 ml cans 750 ml product and 4.1 g nitrogen gas.

Optionally, there may be present in the container of the aerosol can a separate cylinder filled with the gas to be used. These cylinders which release so much propellant that the pressure in the aerosol can substantially remains constant are described in, e.g., EP-A-0 349 053 and EP-A-0 446 973. Commercially available cylinders are, e.g., P.G.® cylinders.

Depending on the viscosity and the form stability of the packed product, the valve of the aerosol can may be combined with a specific nozzle. The more viscous the packed food, the larger the nozzle opening must be.

The container of the aerosol can to be used according to the invention may be made of all known materials disclosed for this purpose by the state of the art, as long as these materials do not adversely affect the properties of the food. In particular, containers of tinplate and aluminium, which may be coated on the inner side with an inert coating or lacquer, are very suitable. However, aerosol cans of glass or plastic may be used as well, as long as it can be guaranteed that they can resist the required minimum initial pressure.

Before the aerosol cans are carried to the filling plant, the aerosol cans are thoroughly cleaned with water and disinfected with hydrogen peroxide. The hydrogen peroxide is removed afterwards by heating. From this phase the aerosol cans remain in a low-germ environment, a so-called "salle blanche". In this sterile chamber an excess pressure of sterile air prevails, with the result that any form of infection is prevented. The aerosol cans are filled with product and provided with a valve which is forced on the aerosol can. Subsequently, they arrive in a specifically adjusted gassing plant in which the propellant is injected into the aerosol can under pressure (optionally while shaking). Through the pressure of the gas in the aerosol can the product is shut off from the outside air. The gas applied is preferably nitrogen gas, optionally in combination with dinitrogen oxide. After gassing the aerosol cans leave the sterile chamber and are tested for sufficient gas pressure. Finally, the aerosol cans are provided with a nozzle and a cover to close the whole hygienically.

The present invention will now be explained in more detail with reference to the following examples.

### Example 1

From 50 parts by weight of cream having a fat content of 40%, 48 parts by weight of low-fat milk and 2 parts by weight of emulsifier and stabilizer a common cream is prepared. In particular, the milk and the cream are pasteurized for 20 seconds at 80°C and then cooled to room temperature. The emulsifier/stabilizer mixture is added, after which the composition is sterilized for 4 seconds at 137°C (Steritherm/Sterideal). Then the mixture is cooled to a temperature below 10°C and a 405 ml aluminium aerosol can container is filled with 250 g product.

Subsequently, the aerosol can is provided with a valve, and 2.1 g nitrogen gas is put in the aluminium container in sterile condition. A conventional push knob/nozzle combination is placed on the valve.

When the valve is pressed in, a liquid cream having a foamy surface is dosed from the aerosol can. The foam is very stable and has not yet collapsed after half an hour.

### Example 2

From whole milk (80 parts by weight), sugar (12 parts by weight), cream (4 parts by weight), egg yolk (2 parts by weight), and conventional colourants, aromatic substances, stabilizers and emulsifiers (2 parts by weight) a vanilla sauce is prepared in the conventional manner. In particular, the milk is pasteurized for 10 seconds at 72°C. To half of the milk are added the other ingredients, apart from the cream. The remaining part of the milk and the cream are added, and the whole is pasteurized on a plate pasteurizer for 22 seconds at 79°C. Then the sauce is homogenized (200/20 bar) and cooled to 6°C. Before filling a 405 ml aluminium aerosol can container according to Example 1, the product is heated on a plate UHT heat exchanger (4 sec.; 137°C).

The resulting vanilla sauce has a viscosity of 350 mPa.s (10°C).

1.8 g nitrogen gas and 0.6 g dinitrogen oxide are added. By opening the valve a slightly foamy vanilla sauce is dosed.

## Claims

1. An aerosol can comprising a viscous, gel-like or paste-like food having a viscosity of at least 20 mPa.s at a shearing rate of less than 400 s⁻¹, and a propellant, the propellant being formed for at least 15 percent by weight, based on the total propellant, of a first gas selected from nitrogen gas and/or compressed air, which propellant further contains a second gas being acceptable from the viewpoint of food technology, which substantially dissolves in the food, which aerosol can has an initial pressure of at least 5 atmospheres.

2. The aerosol can of claim 1, wherein the viscous food is cream.

3. The aerosol can of claim 1 or 2, wherein the first gas is nitrogen gas.

4. The aerosol can of any one of the preceding claims, wherein the second gas is laughing gas.

5. The aerosol can of any one of the preceding claims having an initial pressure of between 5 and 18 atmospheres.

6. The aerosol can of claim 6, having an initial pressure of between 8 and 12 atmospheres.

7. Use of nitrogen gas in a viscous, gel-like or paste-like food having a viscosity of at least 20 mPa.s at a shearing rate of less than 400 s⁻¹, packed in an aerosol can having an initial pressure of at least 5 atmospheres, in an amount of at least 15 percent by weight, based on the total propellant, as a stable foam producing propellant.

8. Use according to claim 7, wherein nitrogen gas is present, drawn to the total weight of the propellant, in an amount of 15-100%, preferably at least 45%, the optional remainder being formed by a gas which is properly soluble in the food.
